**Europäisches Patentamt**

**European Patent Office**

**Office européen des brevets**

(19)

(11) Veröffentlichungsnummer: **0 336 923**
A2

# (12) EUROPÄISCHE PATENTANMELDUNG

(21) Anmeldenummer: **89890090.7**

(22) Anmeldetag: **04.04.89**

(51) Int. Cl.4: **C 22 B 7/02**
**C 22 B 7/04, C 22 B 19/30,**
**C 22 B 1/14**

(30) Priorität: **08.04.88 AT 925/88**

(43) Veröffentlichungstag der Anmeldung:
**11.10.89 Patentblatt 89/41**

(84) Benannte Vertragsstaaten:
**BE CH DE ES FR GB GR IT LI LU NL SE**

(71) Anmelder: **VOEST-ALPINE STAHL DONAWITZ GESELLSCHAFT M.B.H.**
**Pestalozzistrasse 128 Postfach 1**
**A-8700 Leoben-Donawitz (AT)**

(72) Erfinder: **Lugscheider, Walter, Dipl.- Ing. Dr.**
**Ziegelstrasse 9L**
**A-8045 Graz (AT)**

**Pochmarski, Luzian Dipl.-Ing.**
**Roseggerstrasse 27**
**A-8700 Leoben (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) **Verfahren zur Verwertung von zinkhältigen Hüttenstäuben und -schlämmen.**

(57) Bei einem Verfahren zur Verwertung von Zn-hältigen Hüttenstäuben und -schlämmen werden die Zn-hältigen Stäube und -schlämme agglomeriert, kalt brikettiert oder pelletiert und der Charge eines Einschmelzofens für das Erschmelzen von Metall aus metallisierten Chargen, wie z.B. Schrott oder Roheisen, zugesetzt. Hiezu werden insbesondere Agglomerate oder Pellets mit einem Metallisierungsgrad von wenigstens 30 Gew.-%, vorzugsweise wenigstens 40 Gew.-%, eingesetzt.

EP 0 336 923 A2

**Beschreibung**

## Verfahren zur Verwertung von zinkhältigen Hüttenstäuben und -schlämmen

Die Erfindung bezieht sich auf ein Verfahren zur Verwertung von Zn-hältigen Hüttenstäuben und -schlämmen.

Eine Entsorgung von Zn-hältigen Hüttenstäuben und -schlämmen über den Einsatz als Sekundärrohstoffe in Zinkhütten ist bei Zinkgehalten unter 20 Gew.-% nicht wirtschaftlich. Die fehlende Wirtschaftlichkeit ergibt sich zum einen aus den hohen Kosten hydrometallurgischer Verfahren mit nachgeschalteter Elektrolyse und zum andern aus der Tatsache, daß hohe Mengen hoch eisenhältiger Restschlämme entstehen. Wirtschaftliche Entsorgungen derartiger Zinkabfälle sind gegenwärtig über Drehrohrofenprozesse ab Zinkgehalten von etwa 30 Gew.-% möglich.

Die Entsorgung von zinkarmen Hüttenstäuben und -schlämmen mit einem Zinkgehalt zwischen 0,1 und 10 Gew.-% erfolgt heute durch Einsatz dieser Stoffe in Elektrolichtbogenöfen. Die Anreicherung des Zinkes erfolgt in den Abgasfiltern bis zu einer Zinkkonzentration um 20 Gew.-%. Beim Einsatz von zinkhältigen Stäuben im Konverter wurden bereits Überlegungen angestellt, die sogenannte Zinkspirale, d.h. den Kreislauf zwischen Verdampfung und Kondensation des Zinkes im Inneren des Konverters so weit zu treiben, daß zinkhältige Stäube von etwa 20 Gew.-% erhalten werden können. Mit einer derartigen Verfahrensweise ist allerdings der metallurgische Nachteil verbunden, daß der Zinkgehalt im Stahl wegen der hohen Reaktionstemperatur ansteigt, so daß insgesamt wiederum eine ungenügende Wirtschaftlichkeit beim Einsatz der Zinkhütten resultiert.

Die Erfindung zielt nun darauf ab, ein einfaches und kostengünstiges Verfahren zur Verwertung von zinkhältigen Hüttenstäuben und -schlämmen zu schaffen, mit welchem sowohl Hochofen-, Gicht- und LD-Mischschlämme als auch die bei der Trokkenentstaubung anfallenden Gicht-, Hochofen- und Konverterstäube entsorgt werden können. Zur Lösung dieser Aufgabe besteht das erfindungsgemäße Verfahren im wesentlichen darin, daß die Zn-hältigen Hüttenstäube und -schlämme mit einem Kohlenstoffträger agglomeriert, kalt brikettiert oder pelletiert werden, daß die Agglomerate oder Pellets mit einem Metallisierungsgrad von wenigstens 30 Gew.-%, vorzugsweise wenigstens 40 Gew.-%, eingesetzt werden und daß bei der Herstellung von Pellets durch Zugabe von Kohlenstoffträgern ein C-Gehalt von 20 bis 25% eingestellt wird und der Charge eines Einschmelzofens für das Erschmelzen von Metall aus metallisierten Chargen, wie z.B. Schrott oder Roheisen, zugesetzt werden. Durch Agglomerieren, insbesondere Pelletieren, der Stäube, gegebenenfalls unter Zusatz von Schlämmen lassen sich auf diese Weise aus dem Einschmelzprozeß, insbesondere dann, wenn der Einschmelzprozeß nach dem sogenannten KVA-Verfahren durchgeführt wird, Stäube mit einem Gehalt von 40 bis 50 Gew.-% Zink gewinnen. Das sogenannte KVA-Verfahren ist ein allothermisches Konverterverfahren, bei welchem Schrott mit Kohle und Zuschlägen in einem geeigneten Schmelztiegel mit Erdgas oder flüssigen Brennstoffen und Sauerstoff aufgeschmolzen wird. Auf Grund der reduzierenden Bedingungen für die zinkhältigen Einsatzstoffe in einem Einschmelzofen, insbesondere im Rahmen des KVA-Verfahrens, lassen sich hohe Metallisierungsgrade erzielen und eine weitere Anreicherung von Zink in den entstehenden Hüttenstäuben kann durch Einsatz verzinkter Schrottsorten in einem derartigen Einschmelzofen erzielt werden, bei welchem Metall aus metallisierten Einsatzstoffen erschmolzen wird. Die Brikettierung muß in allen Fällen als Kaltbrikettierung vorgenommen werden, wobei jedoch bevorzugt eine Pelletierung vorgenommen wird, um zusätzlichen Staubaustrag zu vermeiden. Die in der reduzierenden Atmosphäre des Schmelzofens zum Erschmelzen von Metall aus metallisierenden Chargen erzeugten Zinkmengen werden vom Staub angenommen, wohingegen das Oxid in die Schlacke ge langen würde und verloren geht. Der Anteil von Zinkoxid in der Schlacke bringt die eingangs gezeigten Probleme mit der Zulässigkeit und den Kosten einer Sonderdeponie mit sich. Das vom Staub angenommene Zink erhöht als metallisches Zink das Zinkausbringen und es kann unter weitgehender Nutzung der Eisengutschrift durch bereits erfolgte Metallisierung bei den Trockenentstaubungen noch eine weitere Verbesserung des Eisenausbringens erzielt werden, wenn durch Zugabe von Kohlenstoffträgern, vorzugsweise Gicht- und Hochofenschlämme als Kohlenstoffträger, eine Ausreduktion von nicht-metallisierten Anteilen der Hüttenwerkstäube erzielt wird. Die gegebenenfalls nicht reduzierten oxidischen Anteile, u.zw. sowohl die oxidischen Eisenanteile als auch gegebenenfalls in die Schlacke gelangte Zinkoxidanteile können nach Zerkleinerung und Magnetscheidung über den Konverterprozeß neuerlich nutzbar gemacht werden, so daß sich in Summe eine nahezu 100%-ige Wiederverwertung sowohl der Zink- als auch der Eisenfracht der Hüttenabfälle, Stäube und Schlämme bei überaus geringen Kosten ergibt. Die im Rahmen des erfindungsgemäßen Verfahrens einzusetzenden Agglomerate oder Pellets werden mit einem Metallisierungsgrad von wenigstens 30 Gew.-%, vorzugsweise wenigstens 40 Gew.-%, eingesetzt, wobei ein derartig hoher Metallisierungsgrad dadurch sichergestellt werden kann, daß bei der Herstellung der Pellets durch Zugabe von Kohlenstoffträgern ein C-Gehalt von 20 bis 25 Gew.-% eingestellt wird.

Während die Brikettierung mit relativ hohen anlagentechnischen Investitionen verbunden ist, kann eine Pelletierung mit relativ einfachen Mitteln unter Erhalt von gute Festigkeit aufweisenden Pellets durchgeführt werden. Mit Vorteil wird zur Erhöhung der Festigkeit der Pellets und damit zur Verringerung eines zusätzlichen Staubaustrages zur Härtung und Trocknung der Pellets ein Bindemittel, wie Kalkmilch und/oder Kalk, zugesetzt. Mit derartigen Pellets können die üblicherweise im KVA-Verfahren mitchargierten Zuschlagstoffe in geringeren Mengen eingesetzt werden, und es kann insbesondere ein gegebenenfalls erwünschter Kalkzusatz in dem gleichen Ausmaß reduziert werden, als er zur Härtung und Trocknung der Pellets bereits Verwendung gefunden hat.

Mit Vorteil werden im Rahmen des erfindungsgemäßen Verfahrens Agglomerate oder Pellets der nachfolgenden Zusammensetzung:
20 - 25 Gew.-% Kohlenstoffträger
5 Gew.-% Bindemittel
Rest Hüttenstaub enthaltend ZnO, und/oder PbO und/oder $Fe_2O_3$ und/oder MgO und/oder $SiO_2$ und/oder CaO
eingesetzt. Bei Verwendung derartiger Bindemittel und Kohlenstoffträger enthaltender Pellets kann eine hohe Metallisierung des in den Stäuben enthaltenen Zinks sichergestellt werden, und es kann das Zink in der gewünschten Weise mit dem Staub des Schmelzprozesses ausgetragen werden, wobei der Anteil des Zinkes als Zinkoxid in der Schlacke minimiert werden kann.

Im Rahmen des erfindungsgemäßen Verfahrens wird insbesondere im Hinblick auf das KVA-Verfahren, bei welchem die für das Erschmelzen von schmelzflüssigem Eisen aus Schrott erforderliche Schmelzwärme durch Brenner im Inneren des Ofens aufgebracht wird, das Verfahren mit Vorteil so geführt werden, daß die Agglomerate, Briketts oder Pellets in einer Menge von 2 bis 8 Gew.-%, vorzugsweise 5 Gew.-%, der metallischen Charge zugesetzt werden. Es lassen sich somit ohne Beeinträchtigung des Schmelzverfahrens relativ hohe Anteile an Hüttenstäuben bzw. Hüttenschlämmen aufarbeiten, wobei gleichzeitig sichergestellt wird, daß der in den zinkhältigen Stäuben enthaltene Anteil an Zink als metallisiertes Zink in den KVA-Staub und nicht in die Schlacke gelangt.

## Patentansprüche

1. Verfahren zur Auswertung von Zn-hältigen Hüttenstäuben und -schlämmen, dadurch gekennzeichnet, daß die Zn-hältigen Hüttenstäube und -schlämme mit einem Kohlenstoffträger agglomeriert, kalt brikettiert oder pelletiert werden, daß die Agglomerate oder Pellets mit einem Metallisierungsgrad von wenigstens 30 Gew.-%, vorzugsweise 40 Gew.-%, eingesetzt werden und daß bei der Herstellung von Pellets durch Zugabe von Kohlenstoffträgern ein C-Gehalt von 20 bis 25% eingestellt wird und der Charge eines Einschmelzofens für das Erschmelzen von Metall aus metallisierten Chargen, wie z.B. Schrott oder Roheisen, zugesetzt werden.

2. Verfahren nach Anspruch 1, dadurch gekennzeichnet, daß zur Härtung und Trocknung der Pellets Bindemittel, wie z.B. Kalkmilch und/oder Kalk, zugesetzt werden.

3. Verfahren nach Anspruch 1 oder 2, dadurch gekennzeichnet, daß Agglomerate, Pellets oder Briketts der nachfolgenden Zusammensetzung:

20 bis 25 Gew.-% Kohlenstoffträger
5 Gew.-% Bindemittel
Rest Hüttenstaub enthaltend, ZnO und/oder PbO und/oder $Fe_2O_3$ und/oder MgO und/oder $SiO_2$ und/oder CaO
eingesetzt werden.

4. Verfahren nach einem der Ansprüche 1, 2 oder 3, dadurch gekennzeichnet, daß die Agglomerate, Briketts oder Pellets in einer Menge von 2 bis 8 Gew.-%, vorzugsweise 5 Gew.-%, der metallisierten Charge zugesetzt werden.